# EUROPEAN PATENT APPLICATION

(11) **EP 1 472 934 A1**
(43) Date of publication of application: **03.11.2004**
(21) Application number: 04251878.7
(22) Date of filing: 30.03.2004
(51) Int. Cl.: A23L 1/00, A23G 3/00, A21D 13/00, A23B 4/10

(54) **Edible moisture barrier for food products**

(30) Priority: 01.04.2003 US 404617
(71) Applicant: Kraft Foods Holdings, Inc., Northfield, Illinois 60093 (US)
(72) Inventor: Haynes, Lynn, Morris Plains, New Jersey 07950 (US); Zhou, Ning, East Hanover, New Jersey 07936 (US); Slade, Louise, Morris Plains, New Jersey 07950 (US); Levine, Harry, Morris Plains, New Jersey 07950 (US); Chan, Wendy, Chestnut Ridge, New York 10977 (US)
(74) Representative: Smaggasgale, Gillian Helen

(57) **Abstract**

The present invention is directed to an edible, bakeable moisture barrier composition that is effective for reducing moisture migration between food components. The moisture barrier includes at least one crystalline carbohydrate, a highly crystalline fat and a crystalline food fiber.

## Description

The present invention relates to a bakeable edible moisture barrier for food products. More particularly, the bakeable moisture barrier is useful in significantly reducing moisture migration within a multi-component food product, between components having different relative water vapor pressures or % relative humidities (aka 'water activities'), even when the multi-component food product is exposed to elevated temperatures. The bakeable edible moisture barrier of this invention is formed from a composition that includes at least one crystalline carbohydrate, a highly crystalline fat and a crystalline food fiber.

### BACKGROUND

For many food products, moisture levels must be maintained if the product is to exhibit optimum organoleptic properties, quality, and taste. Moisture migration in finished food products can seriously compromise quality, stability, and organoleptic properties. In addition, many chemical and enzymatic deteriorative reactions proceed at rates governed in part by the moisture content of foods. Excessive rates of these reactions can promote deleterious changes in the flavor, color, texture, and nutritive value of food products.

In multi-component food products, particularly those having components with different moisture contents and water activities (e.g., prepackaged cheese and crackers or prepackaged bagel and cream cheese products), moisture can migrate between adjacent components, altering the components' characteristics and organoleptic properties. In addition to compromising the quality of finished food products, moisture migration can hinder production and distribution of food products. Thus, for example, the cheese in a cheese/cracker product could dry out, while, at the same time, the cracker loses its crispness.

One method to significantly reduce moisture migration in foods involves coating one or more surfaces of the food product with an edible moisture barrier. Such barriers should have a low moisture permeability, in order to reduce the migration of water between areas of differing water activities. In addition, the barrier should cover the food surface completely, including crevices, and adhere well to the food product surface. The moisture barrier should be sufficiently strong, soft, and flexible to form a continuous surface that will not crack upon handling, yet can be easily penetrated during consumption. In addition, the barrier film's organoleptic properties of taste, aftertaste, and mouthfeel should not be objectionable to the consumer, so that the consumer accepts the moisture barrier as a pleasing component of the product when consumed. Finally, the moisture barrier should be easy to manufacture and easy to use.

Because lipids, such as, for example, oils, fats, and waxes, are composed of lipophilic, water-insoluble molecules capable of forming a water-impervious structure, they have been investigated for use in moisture barrier films. With respect to oleaginous materials (i.e., fats, oils, sucrose polyesters, and the like) and/or other film-forming lipids, it has been shown that, unless an undesirably thick coating is used, the barrier is not effective. Such film-forming lipids tend to melt and run under normal baking conditions and, thus, lose film integrity and barrier effectiveness. Wax barriers have disadvantages as moisture barriers, because they tend to crack upon handling or with changes in temperatures and are organoleptically unacceptable. Accordingly, many of the barriers in the art use a water-impermeable lipid, in association with hydrocolloids or polysaccharides such as alginate, pectin, carrageenan, cellulose derivatives, starch, starch hydrolysates, and/or gelatin, to form gel structures or crosslinked semi-rigid matrices to entrap and/or immobilize the nonaqueous or lipid material. In many cases, these components are formed as bilayer films. These bilayer films may be precast and applied to a food surface as a self-supporting film, with the lipid layer oriented toward the component with highest water activity. See, for example, U.S. Patents 4,671,963 (June 9, 1987), 4,880,646 (November 14, 1987), 4,915,971 (April 10, 1990), and 5,130,151 (July 14, 1992).

There are, however, a number of drawbacks associated with these moisture barriers. The hydrocolloids themselves are hydrophilic and/or water-soluble and thus tend to absorb water with time. The absorption of water by the hydrophilic material in a moisture barrier is greatly accelerated while the film is directly in contact with foods having a water activity (A_{w}) above 0.75. In addition, some hydrocolloids tend to make the barriers fairly stiff, requiring the addition of a hydrophilic plasticizer (e.g., polyol) to increase flexibility. These plasticizers are often strong water holders themselves, thus promoting moisture migration into the barriers and decreased structural stability of the barriers. Furthermore, the texture and the required thickness of some of these barriers may make their presence perceptible and objectionable, when the product is consumed. Additional processing steps (casting and drying) required to form these films make them difficult to use in high-speed commercial production.

### SUMMARY

The present invention provides a bakeable edible moisture barrier for food products. This bakeable moisture barrier is useful in significantly reducing moisture migration within a multi-component food product, between components having different water activities and/or moisture contents, even when the multi-component food product is exposed to elevated temperatures. The edible moisture barrier of this invention is formed from a composition that includes at least one highly crystalline carbohydrate, a highly crystalline fat, and a highly crystalline food fiber. This composition has unique thermomechanical properties that make it ideal as an edible moisture barrier for use in food products.

The bakeable moisture barrier includes a blend of at least one highly crystalline carbohydrate, a crystalline fat, and a crystalline food fiber. In this aspect of the invention, the moisture barrier includes from 50 to 90 weight percent of highly crystalline carbohydrate, preferably 55 to 85 weight percent highly crystalline carbohydrate, and most preferably 60 to 70 weight percent highly crystalline carbohydrate, from 10 to 50 weight percent of crystalline fat, preferably 10 to 45 weight percent crystalline fat, and most preferably 30 to 40 weight percent crystalline fat, and from 0.1 to 30 weight percent of highly crystalline food fiber, preferably 1 to 10 weight percent highly crystalline food fiber, and most preferably 2 to 4 weight percent highly crystalline food fiber.

The present invention also provides an edible moisture barrier and a method for significantly reducing moisture migration between food components having different moisture levels. The edible moisture barrier of the invention has a low moisture permeability and is easy to manufacture and use with a variety of food products. The edible moisture barrier of the invention is effective for covering a food surface completely and providing a barrier that is sufficiently strong, soft, and flexible to form a surface that will resist cracking during handling and storage (both at refrigeration and ambient temperatures), but is easily penetrated during consumption, and which can undergo several heating cycles without significant deterioration of, for example, appearance, flavor, rheology, and/or barrier properties. The edible barrier of the invention has organoleptic properties of taste, aftertaste, and mouthfeel that are not objectionable to the consumer and could be a perceptible, palatable component of the product when consumed. The moisture barrier of the invention is effective for reducing moisture migration between components of a food, depending on the shelf-life of the product, by at least about 50 percent, and more preferably at least about 99 percent, as compared to a food in which no moisture barrier is present.

The present invention also provides a method for reducing moisture migration between food components. In this aspect of the invention, the edible moisture barrier is brought into contact with a food component, in an amount effective for reducing moisture migration from one food component to another. Generally, the edible moisture barrier is applied to the food component to form an essentially continuous barrier layer at least 0.1 millimeter thick, preferably 0.5 millimeter to 10 millimeters thick, and more preferably 1 to 2 millimeters thick.

The present invention also provides an edible moisture barrier and a method for preventing moisture migration between food components having different moisture levels. In this aspect of the invention, the moisture barrier is particularly effective for use in multi-component foods with at least one component having a Aw of greater than 0.30. The edible moisture barrier of the invention has a low moisture permeability and is easy to manufacture and use with a variety of food products. The edible moisture barrier of the invention is effective for covering a food surface completely and providing a barrier that is sufficiently strong, soft, and flexible to form a surface that will resist cracking during handling and storage (either at refrigeration or ambient temperatures), but is easily penetrated during consumption. The edible barrier of the invention has organoleptic properties of taste, aftertaste, and mouthfeel that are not objectionable to the consumer, and could be a perceptible, palatable component of the product when consumed. The moisture barrier of the invention is further effective for increasing refrigerated or ambient shelf life of a food product containing the moisture barrier by at least 2 times and more preferably by up to120 times as compared to a food product in which no moisture barrier is present. This generally translates into a refrigerated or ambient shelf-life for a multi-component food product of 4 months or longer.

### DETAILED DESCRIPTION OF PREFERRED EMBODIMENTS

The edible moisture barrier of the present invention has organoleptic properties of taste, aftertaste, and mouthfeel that are not objectionable to the consumer, and could be a perceptible, palatable component of the product when consumed. The moisture barrier is self-supporting which eliminates the need for a base polymer network/film, thus eliminating the need for casting, coating or drying with a polymeric base layer and eliminating consequent undesirable textural defects, such as chewiness. Indeed, the edible moisture barrier of the present invention melts rapidly and cleanly, is free from residues, and has a creamy (i.e., smooth), non-waxy mouthfeel. This bakeable moisture barrier is useful in significantly reducing moisture migration within a multi-component food product, between components having different water activities, even when the multi-component food product is exposed to elevated temperatures, including baking temperatures, provided the temperature is below the melting point of the crystalline carbohydrate. Additionally, the edible moisture barrier is a three-part system that includes powdered crystalline sugars resistant to high temperature, onto which a second moisture resistant component, such as highly crystalline fat, is coated. The third component of the moisture barrier composition is a long, crystalline fiber having the ability to extend and intertwine to form a stable network structure that resists the tendency to bloom or crack and provides good stability during baking and storage of the food product.

### Definitions

Unless defined otherwise, all technical and scientific terms used herein have the same meaning as commonly understood by one of ordinary skill in the art to which this invention belongs. All patents and publications referred to herein are incorporated by reference herein. For purposes of the present invention, the following terms are defined below.

As used herein, "edible material" includes any material that does not have to be removed from the food component before it is eaten (i.e., a material that can be safely chewed and ingested by the consumer).

As used herein, "barrier" or "moisture barrier" is understood to describe a continuous structure or layer that is essentially impermeable to moisture migration through it, and which coats an inner or outer surface of a food product. The barrier may be described as a filling, coating, film, or membrane. The barrier can be placed between components having differing relative water vapor pressures within the food product, to prevent or significantly reduce moisture migration between the components, or on the outer surface of the food product, to prevent or significantly reduce moisture migration between the food product and the ambient environment. The moisture barrier of this invention is designed to be used in direct contact with moist foods and to be effective against moisture migration through vapor equilibration and/or liquid diffusion. For purposes of this invention, in the case of significantly reducing moisture migration between the food product and the ambient environment, the first food component would be considered to be one or more outer surfaces of the food product and the second food component would be considered to be the ambient environment.

Bakeable, as used herein in combination with moisture barrier refers to a moisture barrier that can be baked at a temperature up to about 210 ° C(410 °F) for up to 10 minutes and still provide desirable organoleptic and moisture barrier effectiveness properties as described herein.

As used herein, lipid, refers to any of a group of substances that in general is soluble in or miscible with ether, chloroform, or other organic solvents for fats and oils (technically, triglycerides, short for triglycerides of fatty acids) but is practically insoluble in water. Lipids may be classified as simple lipids, compound lipids or derived lipids.

Simple lipids include esters of fatty acids with alcohols. Fats and oils are esters of fatty acids with glycerol, and waxes are esters of fatty acids with alcohols other than glycerol.

Derived lipids include substances derived from natural lipids (simple or compound), such as fatty acids, fatty alcohols and sterols, hydrocarbons and emulsifiers (artificially derived, surface-active lipids).

As used herein, water activity (A_{w}), is the ratio of the vapor pressure of water in the food of interest to the vapor pressure of pure water at the same temperature.

Barrier effectiveness was evaluated analytically by a cracker method. A control was prepared by using an aluminum weigh pan into which a Ritz^{TM} cracker was placed (relative water vapor pressure = 9.9%) and placed in a constant humidity room (equilibrium relative humidity of 63%) at 72 °F (22°C). Moisture gain was monitored over a 45-day period. Similarly prepared Ritz^{TM} crackers were coated with a selected barrier composition, with a thickness of about 1 to 2 millimeters, baked in an oven at 350°F (177°C) for 10 minutes, and compared to a control, under identical storage conditions, in terms of % moisture gain vs. storage time. An average of at least 3 replicates is required and used for comparison purposes. This method closely simulates the actual product application condition, in which the barrier is in direct contact with a moist food component.

### Crystalline Carbohydrate

The moisture barrier of the present invention includes a crystalline carbohydrate. As used herein, crystalline carbohydrate refers to any polyhydroxy compound, such as sugars including mono and disaccarides (sucrose, lactose, dextrose), sugar alcohols (maltitol, isomalt, lactitol, erythritol), starch derivatives (maltose), cellulose derivatives (cellobiose), beta-glucan, cellulose analogues such as chitin, xylan derivatives such as xylobiose, and mixtures thereof which are all quite soluble in aqueous solvent but readily crystallized from aqueous solvent into a three dimensional atomic/molecular arrangement of regular repeating units in an energetically stable state. The crystalline carbohydrate has a melting point of at least 80°C, preferably at least 140°C and most preferably greater than 180°C. The crystalline carbohydrate has a particle size sufficiently small so as to avoid "gritty" perception on the tongue and provide sufficient surface area for fat coating. At least 25% of the crystal mass is below 177 microns in size, preferably 90% of the crystal mass is below 149 microns, and most preferably is 99% of the crystal mass is below 149 microns.

### Crystalline Fat

The edible moisture barrier of the invention includes a crystalline fat. Highly crystalline fat is less prone to migrate into other areas of a food product, or out of a product, during baking or storage. Highly crystalline fat has better processing properties when incorporated into or onto a food (controlled flow) and lends itself to a wider range of process applications (e.g. sheeting, rolling, depositing). Furthermore, highly crystalline fat has excellent moisture barrier properties. The solid fat content of the highly crystalline fat may be at least 1% at 80°F (27°C) and at least 5% at 70°F (21°C), preferably at least 13% solids at 80°F (27°C) and at least 15% solids at 70°F (21°C) and most preferably at least 17% solids at 80 °F (27°C) and at least 22% solids at 70°F (21° C). Suitable edible, low melting triglycerides include oxidatively stable natural, or hydrogenated and/or fractionated vegetable oils or animal fats including, for example, coconut oil, palm kernel oil, rapeseed oil, soybean oil, palm oil, sunflower oil, corn oil, canola oil, cottonseed oil, peanut oil, cocoa butter, lard, beef fat, and the like, as well as mixtures thereof. Preferred edible, low-melting triglycerides should be stable against oxidation or hydrolysis and may include canola oil, palm oil, palm kernel oil, coconut oil, partially hydrogenated soybean oil and mixtures thereof.

### Crystalline Food Fiber

The edible moisture barrier of the invention includes a crystalline food fiber. As used herein, crystalline food fiber refers to any polysaccharide having at least 50% of its mass completely hydrogen-bonded in a higher-ordered structure (e.g. multiple helix formation), preferably at least 75% of its mass completely H-bonded in a higher-ordered structure, and most preferably at least 90% of its mass completely H-bonded in higher-ordered structure. The H-bonding between sheets prevents 'binding' of water. The polysaccharide fibers may have some associated lignin. The crystalline food fiber particle is highly birefringent and is morphologically distinct, long and thin (typically, an axial ratio of 5 to 1, preferably 10 to 1, and most preferably 20 to 1). Individual fiber pieces can be up to 400 microns in length and able to extend and intertwine throughout the moisture barrier, providing a strengthening network to enhance handling and prevent cracking during baking and storage. The highly crystalline fiber may be derived from multiple botanical sources including wheat, oat, corn, rice, beet, cane, chicory, Jerusalem artichoke, dahlia tuber and mixtures thereof. Typically, oat or wheat fiber is used in the moisture barrier application, because it is readily available commercially.

### Application of Moisture Barrier

The carbohydrate based moisture barrier is made by mixing appropriate proportions of sugar, fat, and fiber together at room temperature using a conventional mixer (e.g. paddle, pin, etc.). Alternatively, the fat can be melted prior to mixing with the carbohydrate and fiber. In one practice of the invention, the barrier is applied pre-bake by immersing the food product, or simply the surface thereof to be coated, into a melted or molten moisture barrier composition, prior to baking and allowing the coated product to cool. Similarly, the barrier may be applied post-bake by immersing the food product, or simply the surface thereof to be coated, into a melted or molten moisture barrier composition, prior to removing and allowing the coated product to cool. Alternatively, the barrier, without melting, can be co-extruded with the product or triple-extruded should multiple product layers be involved and then baked and cooled. In another practice of the invention, the moisture barrier, without melting, can be pumped through a depositor and applied to the product as a layer, either pre-bake or post-bake. In another practice of the invention, the molten film is applied by brushing or otherwise applying the composition to the desired surface(s) of the product. Suitable techniques include, for example, dipping, pancoating, and use of a fluidized bed. In still another practice of the invention, the film can be applied using a spray, including an atomized spray, air-brushing, and the like. Generally, the edible moisture barrier is applied to the food component to form an essentially continuous barrier layer at least 0.1 millimeter thick, preferably 1 millimeter to 10 millimeters thick, and more preferably 1 to 2 millimeters thick.

The following examples illustrate methods for carrying out the invention and should be understood to be illustrative of, but not limiting upon, the scope of the invention which is defined in the appended claims.

### EXAMPLES

### EXAMPLE 1

Fat (40 g) was melted at 125°F (52°C).

5 g fiber was blended with the fat.

55 g of carbohydrate was added to the fat/fiber mixture and mixed well.

The mixture was removed from the mixer and sheeted to a 1 millimeter to 2 millimeter thickness. 2 inch (5 1 cm) diameter circles were cut with a cookie cutter.

The cut moisture barrier was placed on top of a cracker and the moisture barrier/cracker combination was baked in an oven at 300 °F (149°C) for 10 minutes.

The moisture barrier/cracker was removed and tested for storage stability.

### EXAMPLE 2

Cracker dough was prepared by mixing 69 g flour, 9.5 g oil, 0.5 g leavening, 1 g salt, and 20 g water.

A moisture barrier was prepared by blending 60 g 10x sugar, 37 g hydrogenated soybean oil, and 3 g of oat fiber at room temperature.

The dough was sheeted to 1mm thick and cut into 4 inch (102 mm) squares.

A strip of moisture barrier was deposited on the middle of a cut square. The weight ratio of dough to barrier was to 1.

Dough was rolled into a tube shape and baked at 400°F (204°C) for 9 minutes until the dough was crisp and golden brown.

### EXAMPLE 3

### Post-bake application

61.5 g 10x sugar, 38 g hydrogenated soybean oil, and 0.5 g of Oat fiber were blended at room temperature.

The moisture barrier mixture was melted at a holding temperature of 125 °F (52°C) and the temperature was held.

The surface of a 15 g baked cookie (RH = 17%) was coated with 2.0 g of barrier.

A 12 g strip of caramel (RH = 55%) was deposited on top of the barrier, and the entire product was enrobed in chocolate compound coating.

The product was stored for 4 months and tested.

Numerous modifications and variations in the practice of the invention are expected to occur to those skilled in the art, upon consideration of the foregoing detailed description of the invention. Consequently, such modifications and variations are intended to be included within the scope of the following claims.

## Claims

1. An edible, bakeable moisture barrier composition comprising at least one crystalline carbohydrate, a highly crystalline fat and a crystalline food fiber, the moisture barrier is effective for reducing moisture migration between components within foods by at least 50%, as compared to foods in which no moisture barrier is present.

2. An edible, bakeable moisture barrier composition comprising:
from 50 to 90 weight percent of a crystalline carbohydrate;
from 10 to 50 weight percent of a crystalline fat; and
from 0.1 to 30 weight percent crystalline food fiber.

3. The edible, bakeable moisture barrier composition of claim 1 or 2, wherein the moisture barrier includes from 50 to 90 weight percent of a crystalline carbohydrate, from 10 to 50 weight percent of a crystalline fat, and from 0.1 to 30 weight percent crystalline food fiber.

4. The edible, bakeable moisture barrier of any one of claims 1 to 3 wherein at least 25% of the crystalline carbohydrate has an average particle size of less than 177 microns.

5. The edible, bakeable moisture barrier of any one of claims 1 to 4 wherein the crystalline carbohydrate is selected from the group consisting of monosaccharides, disaccharides, sugar alcohols, starch derivatives, cellulose derivatives, beta-glucan, cellulose analogues and mixtures thereof.

6. The edible, bakeable moisture barrier of claim 5 wherein the disaccharide is selected from the group consisting of sucrose, lactose, maltose, or a monosaccaride such as dextrose and mixtures thereof.

7. The edible, bakeable moisture barrier of claim 5 wherein the sugar alcohol is selected from the group consisting of maltitol, isomaltitol, lactitol, erythritol and mixtures thereof.

8. The edible, bakeable moisture barrier of any one of claims 1 to 7 wherein the crystalline fat has a solid fat content of at least 1% at 80°F (27°C).

9. The edible, bakeable moisture barrier of any one of claims 1 to 8 wherein the crystalline fat is selected from the group consisting of coconut oil, rapeseed oil, soybean oil, palm oil, palm kernel oil, sunflower oil, corn oil, canola oil, cottonseed oil, peanut oil, cocoa butter, lard, beef fat, and mixtures thereof.

10. The edible, bakeable moisture barrier of claim 9 wherein the crystalline fat is selected from the group consisting of canola oil, palm oil, palm kernel oil, coconut oil, partially hydrogenated soybean oil and mixtures thereof.

11. The edible, bakeable moisture barrier of any one of claims 1 to 10 wherein the crystalline food fiber is a polysaccharide with at least 50% of its mass completely H-bonded in a higher-ordered structure.

12. The edible, bakeable moisture barrier of any one of claims 1 to 11 wherein the crystalline food fiber particle has an axial ratio of 5 to 1.

13. The edible, bakeable moisture barrier of any one of claims 1 to 12 wherein the crystalline food fiber is a fiber selected from the group consisting of wheat fiber, oat fiber, corn fiber, rice fiber, beet fiber, cane fiber, chicory, Jerusalem artichoke, dahlia tuber and mixtures thereof.

14. The edible, bakeable moisture barrier of claim 13 wherein the crystalline food fiber is oat fiber or wheat fiber.

15. A method for reducing moisture migration between food components, the method comprising applying a edible bakeable moisture barrier to a surface of a food product, the moisture barrier comprising a crystalline carbohydrate, a crystalline fat and a crystalline food fiber, the method effective for reducing moisture migration between food components by at least 50%, as compared to foods in which no moisture barrier is present.

16. A method according to claim 15 wherein the moisture barrier is the moisture barrier of any one of claims 1 to 14.
